(19) Europäisches Patentamt / European Patent Office / Office européen des brevets

(11) **EP 2 779 188 A1**

(12) # EUROPEAN PATENT APPLICATION
published in accordance with Art. 153(4) EPC

(43) Date of publication:
**17.09.2014  Bulletin 2014/38**

(21) Application number: **11875473.8**

(22) Date of filing: **11.11.2011**

(51) Int Cl.:
***H01G 9/02*** *(2006.01)*

(86) International application number:
**PCT/JP2011/076038**

(87) International publication number:
**WO 2013/069146 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Nippon Kodoshi Corporation**
**Kochi-shi**
**Kochi 781-0395 (JP)**

(72) Inventors:
• **TANAKA Kosuke**
**Kochi-shi**
**Kochi 781-0395 (JP)**

• **FUJIMOTO Naoki**
**Kochi-shi**
**Kochi 781-0395 (JP)**

(74) Representative: **Müller-Boré & Partner**
**Patentanwälte PartG mbB**
**Friedenheimer Brücke 21**
**80639 München (DE)**

(54) **SEPARATOR FOR ELECTROLYTIC CAPACITOR, AND ELECTROLYTIC CAPACITOR**

(57)    A cellulose solution obtained by dissolving cellulose in an amine oxide solvent is formed in a film form, and the resulting cellulose solution is immersed in water or a poor solvent of the amine oxide solvent, so as to coagulate and regenerate the cellulose. The regenerated cellulose is washed with water to remove the amine oxide solvent, and then dried, thereby obtaining a cellulose film that is thin, uniform, and dense and has few impurities.

An aluminum electrolytic capacitor, which has been down-sized and/or capacity enlarged, can be constructed by interleaving the obtained cellulose film as a separator between an anode aluminum foil and a cathode aluminum foil and winding them into a capacitor element, immersing the capacitor element in liquid electrolyte so as to impregnate it with the electrolyte, placing it in a case, and then sealing it closed and aging it.

EP 2 779 188 A1

# EP 2 779 188 A1

**Description**

TECHNICAL FIELD

The present invention relates to a separator for an electrolytic capacitor and an electrolytic capacitor. More specifically, it relates to a separator for an aluminum electrolytic capacitor using, for example, a cellulose film as the separator capable of down sizing and/or capacity enlargement of a capacitor, and an electrolytic capacitor using said separator.

BACKGROUND ART

Generally, an aluminum electrolytic capacitor is constructed by interleaving a separator between an anode aluminum foil and a cathode aluminum foil and winding them into a capacitor element, impregnating the capacitor element with electrolyte, placing it in a case, and then sealing it closed and aging it.

Dielectric of the aluminum electrolytic capacitor is a very thin oxide film formed on the surface of the anode aluminum foil through electrolytic oxidation (chemical conversion). Through impregnation of electrolyte in the separator within the capacitor element, the electrolyte becomes a real cathode and the oxide film on the anode aluminum foil surface becomes a dielectric.

The capacitance of the capacitor is expressed by the following Formula 1.

$$C = \varepsilon S/d \ \dots\dots \ \text{Formula 1}$$

C: Capacitance (F)
$\varepsilon$: Dielectric constant (F/m) of dielectric
S: Surface area ($m^2$) of electrode
d: Distance (m) between electrodes

To attain a larger capacitance [C in Formula 1] of the aluminum electrolytic capacitor, it is effective to increase the surface area [S in Formula 1] of the electrodes and decrease the distance [d in Formula 1] between the electrodes since the dielectric constant [$\varepsilon$ in Formula 1] is dependent on type of dielectric. Since the oxide film can be formed having an arbitrary thickness and with high withstand voltage per unit thickness, the aluminum electrolytic capacitor has a smaller distance d between the electrodes than other types of capacitors such as ceramic capacitors and film capacitors. Moreover, etching of the anode aluminum foil allows an approximately 20 to 120 times larger effective area than the apparent area, and therefore the area S of the electrodes is larger. As a result, realization of a smaller aluminum electrolytic capacitor having a larger capacitance than other types of capacitors is the greatest feature.

The main role of the separator in the aluminum electrolytic capacitor is isolation of the electrode films and retaining the electrolyte. Electrical insulation is required for the material of the separator, and hydrophilic properties and lipophilic properties are required for retaining various types of electrolytes. Cellulose has these properties and therefore electrolytic paper, which is cellulosic paper, is used as the separator for electrolytic capacitor.

In recent years, application of energy efficient inverter circuits in all fields related to the environment such as wind-generated electricity, solar cells, hybrid vehicles, electric vehicles, various energy-saving devices, etc. has been expanding through not only Japan but world-wide energy saving policies and measures, and petroleum alternative energy policies and measures. Furthermore, regarding household electronic appliances, many devices such as air-conditioning equipment, refrigerators, laundry machines, lighting devices or the like have started using inverters for the purpose of saving energy.

Here, an inverter refers to an adjustable speed device for highly controlling rotation of a motor by controlling frequency and voltage. The aluminum electrolytic capacitor is used for the inverter to smooth fluctuation components included in direct current output from a rectifier. The aluminum electrolytic capacitor occupies a large volume ratio of the inverter constructional elements, and thus there is a high demand for further down sizing.

The aluminum electrolytic capacitor may also be used for input smoothing in a switching power supply or the like. The switching power supply is a conversion device for outputting arbitrary direct-current electricity by converting an alternating current input from a commercial power supply. The power supplies, such as a switching power supply, also have the case of limited space for installing the aluminum electrolytic capacitor and are demanded for being down sized.

Furthermore, since there are many cases where a plurality of the aluminum electrolytic capacitor is used, and reduction in the number of mounted capacitors is possible if capacity is increased with the same size, there is high demand for capacity enlargement along with down sizing. Further down sizing or capacity enlargement of the aluminum electrolytic capacitor is a common important development point in various fields.

Since the element of the aluminum electrolytic capacitor is constructed by interleaving a separator between an anode aluminum foil and a cathode aluminum foil and winding them, the area [S in the above Formula 1] of the oxide film which is a dielectric of the capacitor, can be increased because length of the anode aluminum foil of an element of the same volume is increased by making the separator thinner, and capacity enlargement of the aluminum electrolytic capacitor can be realized. Furthermore, since volume of the element of the same capacity decreases by making the separator thinner without changing the area [S in the above Formula 1] of the oxide film, down sizing of the aluminum electrolytic capacitor can also be realized.

Some causes of shorting of the aluminum electrolytic capacitor are piercing or damage of the separator due to burr on the tab portion or an electrode foil end, or burr of a connecting part between an electrode foil and a lead wire, damage of the separator due to mechanical stress such as vibration or impact, dielectric breakdown of the oxide film resulting from electrical stress such as spark discharge, the aging process during capacitor manufacturing and a defect of the oxide film, or the like. Making the separator thinner means lowering resistance to these causes of electrical short circuits (referred to as short-circuit resistance characteristics hereafter). It is effective to make the separator have a further uniform and dense formation or increase the density thereof in order to maintain the same short-circuit resistance characteristics even if the separator is made thinner.

In the case of a medium and high voltage aluminum electrolytic capacitor, electrolytic paper having sufficiently high density and thickness to maintain the short-circuit resistance characteristics is used. The higher the working voltage, the higher the risk of short-circuits. Therefore, high density electrolytic paper of one-ply with a density of 0.70 to 1.00 g/cm$^3$ without any pinholes (referred to as 'Fourdrinier simplex' hereafter), which is made using a Fourdrinier machine from a raw material obtained by strongly beating or highly refining fibers, or electrolytic paper of two-ply (referred to as 'Fourdrinier/cylinder duplex' hereafter) made by layering and combining on a paper making machine, high density layers, which are formed by layering paper using the Fourdrinier machine, and low density layers, which are formed by layering paper using a cylinder machine, is used (Patent Document 1).

Softwood kraft pulp that is highly refined by applying a large amount of electric power and taking a refining time is generally used as raw material for the Fourdrinier simplex and the high density layers of the Fourdrinier/cylinder duplex. While the cross section of the softwood kraft pulp before refining has a flat shape approximately 10 $\mu$m by 40 $\mu$m large, it may be fragmented into smaller pieces of several tens of nm to several $\mu$m by refining and thereby generating fibrils. Paper is made by dispersing fibers in water, forming fiber mat on a paper making wire mesh. Thereby, the more the fibers are refined so as to further fragment the fiber diameter, more uniform and dense fiber mat may be formed.

However, it is difficult to make equable diameters and lengths of all of the fibers even if they are further highly refined. As a result, the paper is a sheet of various sized fibers physically intertwined and/or joined by hydrogen bonding. It is difficult to make a completely uniform internal structure of the paper, and there is therefore a limit to improvement in uniformity and minuteness.

Electrolytic paper also has a limit to thinning. In the paper making process, on a paper making wire mesh, water filtering rate becomes slower as many fine fibers fall through the wire mesh during initial water removal and gradually form fiber mat, and after the middle stage of the water removal process, many fine fibers yield a wet paper, thereby gradually forming dense fiber mat. A raw material having a large ratio of fibers with small diameters resulting from high refining needs to be used in order to make thin paper since thickness of the paper depends on diameters of the raw material fibers and how many are layered.

Since fiber length of the raw material having a small fiber diameter resulting from high refining becomes shorter, when making paper of 10 $\mu$m or less, for example, many fine fibers fall through the wire mesh during the initial water removal. Therefore, yield rate decreases and pinholes or formation irregularity occurs. Fibers do not exist in pinholes. There are areas with only a few fibers as formation irregularity has an uneven distribution of fibers. When there is a pinhole or formation irregularity in the separator, electric charge converges in those areas and causes a short-circuit. Furthermore, trouble of repeated tearing of paper of 10 $\mu$m or less occurs even in the paper making process due to decrease in places of physical adhesion between fibers, decrease in insufficient wet paper strength, and decrease in dry paper strength.

The density of paper is calculated by the following Formula 2. Thus, when paper having the same basis weight (weight of paper per 1 m$^2$: g/m$^2$) becomes thinner, density increases.

$$\text{Density (g/cm}^3) = \text{basis weight (g/m}^2)/ \text{ thickness ($\mu$m)} \quad \text{... Formula 2}$$

However, even refining more than the most refined, highly-refined raw material having a density of approximately 1.00 g/cm$^3$ of the Fourdrinier simplex and the high density layers of the Fourdrinier/cylinder duplex makes it difficult for the paper to become thinner and to increase density since the fiber form making the fiber mat hardly changes except for increase in the rate of fibers falling through the wire mesh during paper making.

While calendering in post processing after the paper making process can provide a higher degree of density, providing a higher degree of density by this method only compresses along the thickness the fibers for making the paper but does not change size of the fibers or minuteness along the surface, and thereby does not improve short-circuit resistance characteristics.

A film is a representative molded product that is uniform and in sheet form.

As it is necessary for the separator for an aluminum electrolytic capacitor to retain electrolyte, films that cannot impregnate electrolyte inside such as a polyethylene (PE) film or polypropylene (PP) film and films that dissolve electrolyte such as a polyvinyl alcohol (PVA) film cannot be used as the separator. Note that the separator for an aluminum electrolytic capacitor requires dimensional stability and chemical stability at temperatures of 100°C or higher. Use of a PE film, a PP film, or a PVA film as a separator is difficult even from the aspect of heat tolerance.

A representative example of films using as the main component the same cellulose as the electrolytic paper is a cellulose film made by making a film of viscose, which results from dissolving cellulose in an alkali such as sodium hydroxide and carbon disulfide, and neutralizing it using an acid such as sulfuric acid so as to regenerate cellulose (cellulose film made through a viscose process).

Since the cellulose film made through this viscose process is a film, it has a dense component and higher density than the electrolytic paper. Moreover, since it is cellulose, it has hydrophilic properties and lipophilic properties. In the case of electrolytic paper, while the role of retaining electrolyte is mainly taken on by the low density layers of the Fourdrinier/cylinder duplex, if the Fourdrinier simplex or the high density layers of the Fourdrinier/cylinder duplex are also immersed in the electrolyte, the hydrogen bond between fibers or between cellulose molecules is severed and paper is swelled, and the electrolyte can thereby be retained. The cellulose film made through the viscose process does not have any void parts in a dry state since it is highly dense; however, if it is immersed in the electrolyte, the hydrogen bond between the cellulose molecules is severed and film is swelled, and the electrolyte can thereby be retained.

However, since the cellulose film made through the viscose process also causes a chemical reaction that generates carbon disulfide gas in the process of regenerating cellulose, pinholes are easily formed. An approximately 20 $\mu$m-thick cellulose film made through the viscose process has approximately ten pinholes per cm$^2$ having a diameter of 10 $\mu$m or greater, where the thinner the film, the greater the number of pinholes. Since there are pinholes in the cellulose film made through the viscose process, compared to electrolytic paper of the same thickness, the cellulose film made through the viscose process has weaker short-circuit resistance characteristics than the low density electrolytic paper.

Furthermore, the cellulose film made through the viscose process contains hydrosulfate. When using a separator having a high content of hydrosulfate, sulfate ions elute into the electrolyte, corroding the oxide film, which is to be an insulator for the anode aluminum foil of the aluminum electrolytic capacitor. A defective part of the oxide film is a cause of increase in short-circuit defects and leakage current. For the reasons stated above, use of a cellulose film made through the viscose process is unsuitable as a separator for an aluminum electrolytic capacitor.

Furthermore, it is necessary for the cellulose film made through the viscose process to reduce the degree of polymerization of the cellulose, so as to make appropriate viscosity of a cellulose solution at the time of manufacturing. Decrease in degree of polymerization reduces strength of the cellulose film and resistance against the electrolyte.

A cuprammonium rayon process is another representative process of maki ng regenerated cellulose. A cuprammonium solution used in fabrication of cuprammonium rayon is created by adding an ammonium solution and sodium hydroxide to copper sulfate. In the cuprammonium rayon process, the cellulose film is made by dissolving cellulose in the cuprammonium solution, extruding it in diluted sulfuric acid and molding it.

The cellulose film made through the cuprammonium rayon process contains sulfate ions as well as many copper ions. In the case of using a separator having a high content of copper ions, a failure leading to a short-circuit occurs in that copper ions seep into the electrolyte, precipitate as copper oxide on the defective part of the oxide film on the anode aluminum foil when a reverse voltage is applied while the capacitor is repeatedly charging and discharging, and become dendrite that penetrates the separator. For the reasons stated above, use of a cellulose film made through the cuprammonium rayon process is unsuitable as a separator for an aluminum electrolytic capacitor.

Other well-known cellulose solvents include lithium chloride/ dimethylacetamide cellulose solvent, lithium hydroxide/ urea cellulose solvent (Non-patent Document 1), sodium hydroxide/ urea cellulose solvent (Patent Document 2), sodium hydroxide/ thiourea cellulose solvent (Patent Document 3) and ionic liquids. However, the cellulose film using the lithium chloride/ dimethylacetamide cellulose solvent has a high content of chlorine, and the lithium hydroxide/ urea cellulose solvent, the sodium hydroxide/ urea cellulose solvent and the sodium hydroxide/ thiourea cellulose solvent in actual use have a high content of hydrosulfate since diluted sulfuric acid is used in a coagulation bath for neutralizing the alkali.

The ionic liquids are well-known that 1-butyl 3-methylimidazolium salt including Cl-, Br-, SCN-, $BF_4^-$, $PF_6^-$ etc. as an anion dissolves cellulose (Non-patent Document 2); however, the ionic liquids that dissolve the cellulose use chlorine, which has good reactivity, or another halogen as an anion. Since residual elements of the chlorine or halogen corrode the oxide film on the anode aluminum foil more than sulfate ions, use of a cellulose film made using these ionic liquids is unsuitable. Furthermore, as ionic liquids are very expensive, they are unsuitable for manufacturing constructional elements of an aluminum electrolytic capacitor characterized by its affordable price.

Prior Art Documents

Patent Documents

Patent Document 1: JP Patent No. 3693299
Patent Document 2: JP 2008-542560A
Patent Document 3: JP 2009-508015A

Non-patent Documents

Non-patent Document 1: "Experimental and analytical methods of cellulose" series No. 15, Dissolution of cellulose in alkaline-urea solvent and regenerative gelatinization thereof, KUGA, Shigenori, CAI Jie Cellulose Communications Vol. 15, No. 2 (2008)
Non-patent Document 2: CMC Publishing Co., Ltd., Ionic Liquid II- Chapter 13: Solubilization of poorly soluble substances, FUKAYA, Yukinobu and OHNO, Hiroyuki

DISCLOSURE OF THE INVENTION

Problem to be Solved by the Invention

The present invention aims to provide as a separator for an aluminum electrolytic capacitor, a cellulose film that is thin, uniform, and dense and has few impurities. Furthermore, it aims to provide an aluminum electrolytic capacitor that is down sized and/or capacity enlarged by using said cellulose film as a separator.

Means of Solving the Problem

The configuration below, for example, is provided as a means for solving the above aim. That is, a separator for an electrolytic capacitor is characterized in that it is a film using cellulose as a raw material.
Moreover, for example, the film using cellulose as a raw material is characterized in that it is a cellulose film obtained by forming in a film form a cellulose solution obtained by dissolving cellulose in an amine oxide solvent, immersing the resulting cellulose solution in water or a poor solvent of the amine oxide solvent so as to coagulate and regenerate the cellulose, washing the regenerated cellulose with water to remove the amine oxide solvent, and drying the resulting cellulose.
Furthermore, for example, the amine oxide solvent is N-methylmorpholine-N-oxide. Yet further, for example, film thickness is 3 to 20 $\mu$m.
Yet even further, for example, chlorine content of the film is 2 ppm or less. Alternatively, hydrosulfate content of the film is 10 ppm or less.
Alternatively, it is an electrolytic capacitor having the separator with a configuration given above interleaves between an anode foil and a cathode foil.
For example, an aluminum electrolytic capacitor, which has been down-sized and/or capacity enlarged, can be made by interleaving this separator between an anode aluminum foil and a cathode aluminum foil and winding them into a capacitor element, immersing the capacitor element in liquid electrolyte so as to impregnate it with the electrolyte, placing it in a case, and then sealing it closed and aging it, is provided.

Results of the Invention

According to the present invention, minuteness and uniformity may be improved, and density may be higher, thus providing a very dense and uniform film. Short-circuit resistance characteristics of an electrolytic capacitor may be significantly improved by using this film as a separator for the electrolytic capacitor, and further down sizing and/or capacity enlargement of the electrolytic capacitor may be realized.

BRIEF DESCRIPTION OF DRAWINGS

FIG. 1 is a plotted graph showing extracted relationships between thickness of separators and percent defective after aging for 160 WV aluminum electrolytic capacitors;
FIG. 2 is a plotted graph showing extracted relationships between thickness of separators for 160 WV aluminum electrolytic capacitors and capacitance of the aluminum electrolytic capacitors;
FIG. 3 is a plotted graph showing extracted relationships between thickness of separators for 160 WV aluminum electrolytic capacitors and impedance characteristics of the aluminum electrolytic capacitors;
FIG. 4 is a plotted graph showing extracted relationships between thickness of separators and percent defective after aging for 450 WV aluminum electrolytic capacitors;
FIG. 5 is a plotted graph showing extracted relationships between thickness of separator for 450 WV aluminum electrolytic capacitors and capacitance of the aluminum electrolytic capacitors; and
FIG. 6 is a plotted graph showing extracted relationships between thickness of separators for 450 WV aluminum electrolytic capacitors and impedance characteristics of the aluminum electrolytic capacitors.

DESCRIPTION OF EMBODIMENTS

Aluminum electrolytic capacitors according to embodiments of the present invention use a cellulose film made by using an amine oxide cellulose solution as a separator interleaving between an anode aluminum foil and a cathode aluminum foil.

It is preferable to use tertiary amine oxides as the amine oxides, which are main components of an amine oxide solvent, applied in the embodiments of the present invention. While any tertiary amine oxide may be used as long as it dissolves cellulose and mixes it with water and is stable against water, use of N-methylmorpholine-N-oxide (referred to as NMMO hereafter) is particularly preferred from the aspect of availability, ease of collecting and refining used solvent, etc. Here, stable tertiary amine oxide against water means it does not induce a chemical reaction with water.

Composition of the cellulose solution used in the embodiments according to the present invention preferably has concentration ranges of 70 to 95% by weight of NMMO, 2 to 28% by weight of water, and 2 to 20% by weight of cellulose. If the ratio of NMMO falls below 70% by weight, dissolving cellulose becomes difficult. Note that when the concentration of cellulose in the solution drops below 2% by weight, a large amount of cellulose solution is required when making a cellulose film, thereby decreasing production efficiency, and when it exceeds 20% by weight, viscosity of the cellulose solution increases and is thereby inadequate for making a thin film.

Within this range, cellulose can be dissolved favorably and a homogeneous solution can be attained. However, solution conditions differ according to type of solvent, molding equipment, and even molding conditions, and therefore composition of the cellulose solvent is not limited thereto.

Dissolution temperature is preferably within the range of 75°C to less than 150°C. A favorable cellulose solution cannot be obtained at 75°C or less, and decomposition of the NMMO and the cellulose may occur at 150°C or higher. Dissolving at 120°C or less is particularly favorable.

A cellulose base material that is either chlorine-free (TCF) bleached or unbleached is used to make the chlorine content of the cellulose film be 2 ppm or less. Since corrosiveness of the oxide film becomes stronger and increase in short-circuit defects and leakage current occurs when the chlorine content in the separator is greater than 2 ppm, it is unsuitable as a separator for an aluminum electrolytic capacitor. Note that the chlorine content here is a value measured by a method described in JIS C 2300 'Cellulosic papers for electrical purposes' - Part 2: 'Methods of test', Ion chromatography (extraction method) for chlorine content.

Furthermore, in order to make the hydrosulfate content of the cellulose film be 10 ppm or less, it is preferable to use cellulose having a hydrosulfate content of 200 ppm or less. While hydrosulfate decreases in a washing process described later when making a film, the hydrosulfate content in the cellulose film may exceed 10 ppm when washing is insufficient if a cellulose having a hydrosulfate content of 200 ppm or greater is used. If the hydrosulfate content in the separator exceeds 10 ppm, corrosiveness of the oxide film becomes stronger, thereby causing increase in short-circuit defects and leakage current. Note that the hydrosulfate content here is the value of the extract, which is used in the aforementioned chlorine content measurement, measured using the ion chromatograph.

Wood pulp, nonwood pulp, mercerized pulp, dissolving pulp and regenerated cellulose may be used as the cellulose base material. One or more types of these may be used in combination, and paper made from these cellulose base materials may be used as well. It is particularly favorable to use dissolving pulp or cotton linter pulp as the cellulose base material. Dissolving pulp and cotton linter pulp are suitable for preparation of a uniform and homogeneous cellulose film as they have an α-cellulose content of 90% or greater and high cellulose purity. Characteristics of a cellulose film obtained from difference in chemical properties and physical properties of the cellulose base material may be adjusted.

The cellulose solution is passed through a heating extrusion die to be extruded, passed through little air gaps between the heating extrusion die and a coagulation bath, and put in the coagulation bath constituted by water or an NMMO poor solvent. When air gaps are not provided, the heating extrusion die is cooled by the coagulation bath, the cellulose solution is hardened in the extrusion die, and blockage occurs.

As the film forming method, aside from using the heating extrusion die, a method of casting on a heated base material with a predetermined clearance and a method of forming a film by transferring it onto the base material using a heater roller are available. Once the cellulose is regenerated in the coagulation bath, it is washed with ion-exchange water and dried, thereby obtaining a thin, uniform and dense cellulose film with few impurities. The obtained cellulose film has hydrophilic properties and lipophilic properties, and thus the hydrogen bond between cellulose is severed and film is swelled due to immersion in the electrolyte, and thereby the electrolyte can be retained therewithin.

Thickness of the cellulose film is preferably 3 to 20 $\mu$m. The separator has a great influence on the impedance characteristic of the aluminum electrolytic capacitor. Since the cellulose film has a higher density than the electrolytic paper, it has a tendency to have an inferior impedance characteristic to electrolytic paper of the same thickness. However, when substituting the cellulose film for the electrolytic paper as the separator, the cellulose film that is thinner than the electrolytic paper can be used, thereby shortening the anode-cathode distance. As a result, the impedance characteristic is improved and deterioration due to increase in density can be compensated. In this regard, since the impedance characteristic is deteriorated quadratically as the thickness of the cellulose film increases, a practicable thickness for the separator is 20 $\mu$m or less.

Meanwhile, since mechanical strength decreases remarkably with a cellulose film of less than 3 $\mu$m, a problem in the making process such as breaking in the film manufacturing process or aluminum electrolyte capacitor element manufacturing process may occur. Furthermore, it is difficult to use this film as a separator as it is also weak against burrs of the anode aluminum foil and the cathode aluminum foil, and short-circuit resistance characteristics are weak.

An aluminum electrolytic capacitor that has been sized down and/or capacity enlarged can be made by interleaving a cellulose film obtained in this manner as a separator between an anode aluminum foil and a cathode aluminum foil and winding them into a capacitor element, immersing the capacitor element in liquid electrolyte so as to impregnate it with the electrolyte, placing it in a case, and then sealing it closed and aging it.

Working Examples

[Measurement method and evaluation method of separator characteristics]

Measuring method and evaluating method of respective testing results for separators described in respective working examples, comparative examples and conventional examples are as given below.

Thickness, density, tensile strength and chlorine content are measured in compliance with the test method of JIS C 2300: 'Cellulosic papers for electrical purposes'. In measurement of thickness, ten samples are stacked, thickness is measured at three or more points using an automatic stop-type external micrometer, and a mean value per sample is calculated. Measurement of density is conducted in compliance with B method (method of finding density in the absolute dry condition). In measurement of chlorine content, extract produced in compliance with 17. 2. 4. 2 Extraction method, Part 5 is measured through 17. 2. 4. 3 Ion chromatography. The hydrosulfate content is measured by the same method as the chlorine content.

[Manufacturing method of aluminum electrolytic capacitor]

A separator is interleaved between an anode aluminum foil and a cathode aluminum foil, which have undergone etching and oxide film formation so as not to touch each other, and wound into a capacitor element. The capacitor element is impregnated with a predetermined electrolyte, placed in a case and then sealed so as to construct an aluminum electrolytic capacitor that has a diameter of 10 mm, height of 20 mm, and rated voltage of either 160 WV or 450 WV.

[Percent defective after capacitor aging]

Voltage applied to each of 1000 capacitor samples with respect to working examples, each of 1000 capacitor samples with respect to comparative examples and each of 1000 capacitor samples with respect to conventional examples, is gradually increased until reaching approximately 110% of a rated voltage and then the samples are aged. Number of faulty capacitors including aging short-circuits, operation of an explosion proof valve, liquid leakage and external aberrations such as swelling of the sealing part are divided by 1000, and the resulting value is set as percent defective.

[Capacitance of aluminum electrolytic capacitor]

Capacitance of the electrolytic capacitor is measured at 20°C and a frequency of 120 Hz using an LCR meter.

[Impedance of aluminum electrolytic capacitor]

Impedance of the electrolytic capacitor is measured at 20°C and a frequency of 1 kHz using an LCR meter.

[Working Example 1]

150 g of TCF dissolving pulp having a degree of polymerization of 600 is added to 7000 g of a 70% by weight NMMO aqueous solution. The temperature of the compound liquid of this pulp and NMMO is raised to 78°C while stirring and then the water is evaporated, thereby obtaining a cellulose/NMMO solution. Composition of the solution is 2.2% by weight cellulose, 71.9% by weight NMMO, and 25.9% by weight water.

This cellulose/NMMO solution is extruded from a 0.25 mm-wide slit using a T die-type extruder, passed through 10 mm air gaps, and then immersed in a coagulation bath of a 20% by weight NMMO poor solvent so as to regenerate the cellulose.

Once the regenerated cellulose is washed in three washing baths of ion-exchanged water, it is dried in a drum-type dryer, thereby making a cellulose film. The obtained cellulose film has a thickness of 3.1 $\mu$m, a chlorine content of 1.1 ppm, a hydrosulfate content of 5.1 ppm, and tensile strength of 9.8 N/ 15 mm.

[Working Example 2]

150 g of TCF cotton linter pulp having a degree of polymerization of 1500 is added to 7000 g of a 70% by weight NMMO aqueous solution. The temperature of the compound liquid of this pulp and NMMO is raised to 105°C while stirring and then the water is evaporated, thereby obtaining a cellulose/NMMO solution. Composition of the solution is 2.9% by weight cellulose, 94.7% by weight NMMO, and 2.4% by weight water.

This cellulose/NMMO solution is extruded from a 0.50 mm-wide slit using a T die-type extruder, passed through 10 mm air gaps, and then immersed in a coagulation bath of ion-exchanged water so as to regenerate the cellulose. A cellulose film is then made through the same operations as in Working Example 1. The obtained cellulose film has a thickness of 7.9 $\mu$m, a chlorine content of 1.5 ppm, a hydrosulfate content of 3.3 ppm, and tensile strength of 21.6 N/ 15 mm.

[Working Example 3]

1300 g of TCF dissolving pulp having a degree of polymerization of 600 and a hydrosulfate content of 195 ppm is added to 7000 g of a 70% by weight NMMO aqueous solution. The temperature of the compound liquid of this pulp and NMMO is raised to 120°C while stirring and then the water is evaporated, thereby obtaining a cellulose/NMMO solution. Composition of the solution is 19.8% by weight cellulose, 74.6% by weight NMMO, and 5.6% by weight water.

A cellulose film is made by extruding this cellulose/NMMO solution from a 0.15 mm-wide slit using a T die-type extruder and then the same operations as in Working Example 2. The obtained cellulose film has a thickness of 13.8 $\mu$m, a chlorine content of 0.6 ppm, a hydrosulfate content of 9.5 ppm, and tensile strength of 37.2 N/ 15 mm.

[Working Example 4]

600 g of TCF dissolving pulp having a degree of polymerization of 600 is added to 7000 g of a 70% by weight NMMO aqueous solution. The temperature of the compound liquid of this pulp and NMMO is raised to 95°C while stirring and then the water is evaporated, thereby obtaining a cellulose/NMMO solution. Composition of the solution is 9.8% by weight cellulose, 80.0% by weight NMMO, and 10.2% by weight water.

A cellulose film is made by extruding this cellulose/NMMO solution from a 0.30 mm-wide slit using a T die-type extruder and then the same operations as in Working Example 1. The obtained cellulose film has a thickness of 17.3 $\mu$m, a chlorine content of 1.8 ppm, a hydrosulfate content of 5.9 ppm, and tensile strength of 46.1 N/ 15 mm.

[Working Example 5]

600 g of TCF cotton linter pulp having a degree of polymerization of 1500 is added to 7000 g of a 70% by weight NMMO aqueous solution. The temperature of the compound liquid of this pulp and NMMO is raised to 110°C while stirring and then the water is evaporated, thereby obtaining a cellulose/NMMO solution. Composition of the solution is 10.5% by weight cellulose, 85.8% by weight NMMO, and 3.8% by weight water.

A cellulose film is made by extruding this cellulose/NMMO solution from a 0.35 mm-wide slit using a T die-type extruder and then the same operations as in Working Example 1. The obtained cellulose film has a thickness of 19.7 μm, a chlorine content of 1.2 ppm, a hydrosulfate content of 6.7 ppm, and tensile strength of 51.9 N/ 15 mm.

[Comparative Example 1]

150 g of TCF dissolving pulp having a degree of polymerization of 600 is added to 7000 g of a 70% by weight NMMO aqueous solution. The temperature of the compound liquid of this pulp and NMMO is raised to 95°C while stirring and then the water is evaporated, thereby obtaining a cellulose/NMMO solution. Composition of the solution is 2.7% by weight cellulose, 88.2% by weight NMMO, and 9.1% by weight water.

A cellulose film is made by extruding this cellulose/NMMO solution from a 0.15 mm-wide slit using a T die-type extruder and then the same operations as in Working Example 1. The obtained cellulose film has a thickness of 2.3 μm, a chlorine content of 0.5 ppm, a hydrosulfate content of 4.8 ppm, and tensile strength of 3.7 N/ 15 mm.

[Comparative Example 2]

600 g of TCF dissolving pulp having a degree of polymerization of 600 is added to 7000 g of a 70% by weight NMMO aqueous solution. The temperature of the compound liquid of this pulp and NMMO is raised to 110°C while stirring and then the water is evaporated, thereby obtaining a cellulose/NMMO solution. Composition of the solution is 10.4% by weight cellulose, 84.9% by weight NMMO, and 4.7% by weight water.

A cellulose film is made by extruding this cellulose/NMMO solution from a 0.40 mm-wide slit using a T die-type extruder and then the same operations as in Working Example 1. The obtained cellulose film has a thickness of 22.0 μm, a chlorine content of 0.8 ppm, a hydrosulfate content of 5.5 ppm, and tensile strength of 57.8 N/ 15 mm.

[Comparative Example 3]

600 g of TCF dissolving pulp having a degree of polymerization of 650 and a hydrosulfate content of 250 ppm is added to 7000 g of a 70% by weight NMMO aqueous solution. The temperature of the compound liquid of this pulp and NMMO is raised to 120°C while stirring and then the water is evaporated, thereby obtaining a cellulose/NMMO solution. Composition of the solution is 10.2% by weight cellulose, 83.3% by weight NMMO, and 6.5% by weight water.

A cellulose film is made by extruding this cellulose/NMMO solution from a 0.30 mm-wide slit using a T die-type extruder and then the same operations as in Working Example 1. The obtained cellulose film has a thickness of 14.8 μm, a chlorine content of 1.1 ppm, a hydrosulfate content of 12.3 ppm, and tensile strength of 23.5 N/ 15 mm.

[Comparative Example 4]

600 g of ECF dissolving pulp having a degree of polymerization of 600 is added to 7000 g of a 70% by weight NMMO aqueous solution. The temperature of the compound liquid of this pulp and NMMO is raised to 100°C while stirring and then the water is evaporated, thereby obtaining a cellulose/NMMO solution. Composition of the solution is 9.8% by weight cellulose, 80.0% by weight NMMO, and 10.2% by weight water.

A cellulose film is made by extruding this cellulose/NMMO solution from a 0.30 mm-wide slit using a T die-type extruder and then the same operations as in Working Example 1. The obtained cellulose film has a thickness of 15.1 μm, a chlorine content of 2.3 ppm, a hydrosulfate content of 5.8 ppm, and tensile strength of 22.5 N/ 15 mm.

[Comparative Example 5]

Evaluation of physical properties of a cellulose film made through the viscose process using dissolving pulp shows a thickness of 15.5 μm, a chlorine content of 122 ppm, a hydrosulfate content of 512 ppm, and tensile strength of 32.3 N/ 15 mm.

[Comparative Example 6]

Evaluation of physical properties of a commercially available polypropylene (PP) film shows a thickness of 14.3 μm, a chlorine content of 0.2 ppm, a hydrosulfate content of 0.1 ppm, and tensile strength of 28.4 N/ 15 mm.

[Comparative Example 7]

Evaluation of physical properties of a cellulose film made through the viscose process using cotton linter pulp shows a thickness of 18.8 $\mu$m, a chlorine content of 126 ppm, a hydrosulfate content of 485 ppm, and tensile strength of 30.4 N/ 15 mm.

[Conventional Example 1]

A raw material resulting from refining unbleached softwood kraft pulp until reaching a CSF of 5 ml or less using a refining device is made into paper using a Fourdrinier machine so as to make Fourdrinier simplex having a thickness of 10.1 $\mu$m and density of 0.83 g/ cm$^3$. The obtained Fourdrinier simplex has a chlorine content of 0.3 ppm, a hydrosulfate content of 3.8 ppm, and tensile strength of 16.7 N/ 15 mm.

[Conventional Example 2]

A raw material resulting from refining unbleached softwood kraft pulp until reaching a CSF of 5 ml or less using a refining device is made into paper using a Fourdrinier machine so as to make Fourdrinier simplex having a thickness of 15.0 $\mu$m and density of 0.85 g/ cm$^3$. The obtained Fourdrinier simplex has a chlorine content of 0.2 ppm, a hydrosulfate content of 4.2 ppm, and tensile strength of 26.5 N/ 15 mm.

[Conventional Example 3]

As a raw material for Fourdrinier paper making, softwood kraft pulp is refined until reaching a CSF of 5 ml or less using a refining device in such a manner that a high density paper is made having a thickness of 20.1 $\mu$m and density of 0.85 g/ cm$^3$ at a Fourdrinier part, while as a raw material for a cylinder paper making, softwood kraft pulp is refined until reaching a CSF of 400 ml in such a manner that a paper having a thickness of 20.1 $\mu$m and density of 0.61 g/cm$^3$ is made at a cylinder part, and then the obtained papers are combined together to make Fourdrinier/cylinder duplex having an overall thickness of 40.2 $\mu$m and overall density of 0.75 g/cm$^3$. The obtained Fourdrinier/cylinder duplex has a chlorine content of 0.5 ppm, a hydrosulfate content of 5.4 ppm, and tensile strength of 66.6 N/ 15 mm.

[Conventional Example 4]

A raw material resulting from refining unbleached softwood kraft pulp until reaching a CSF of 5 ml or less using a refining device is made into paper using a Fourdrinier machine so as to make Fourdrinier simplex having a thickness of 20.1 $\mu$m and density of 0.86 g/ cm$^3$. The obtained Fourdrinier simplex has a chlorine content of 0.6 ppm, a hydrosulfate content of 4.7 ppm, and tensile strength of 34.3 N/ 15 mm.

[Conventional Example 5]

As a raw material for Fourdrinier paper making, softwood kraft pulp is refined until reaching a CSF of 5 ml or less using a refining device in such a manner that a high density paper is made having a thickness of 25.2 $\mu$m and density of 0.85 g/ cm$^3$ at a Fourdrinier part, while as a raw material for a cylinder paper making, softwood kraft pulp is refined until reaching a CSF of 400 ml in such a manner that a paper having a thickness of 34.8 $\mu$m and density of 0.67 g/cm$^3$ is made at a cylinder part, and then the obtained papers are combined together to m ake Fourdrinier/cylinder duplex having an overall thickness of 60.0 $\mu$m and overall density of 0.75 g/cm$^3$. The obtained Fourdrinier/cylinder duplex has a chlorine content of 0.5 ppm, a hydrosulfate content of 6.1 ppm, and tensile strength of 110.7 N/ 15 mm.

Using the cellulose films obtained in Working Examples 1 to 5, the cellulose films obtained in Comparative Examples 1 to 6, the PP film and the electrolytic papers obtained in Conventional Examples 1 to 3, one thousand 160 WV aluminum electrolytic capacitors are constructed, and percent defective, impedance and capacitance are measured.

The physical properties of the cellulose films obtained in Working Examples 1 to 5, the cellulose films obtained in Comparative Examples 1 to 6, the PP film and the electrolytic papers obtained in Conventional Examples 1 to 3, and evaluation results of the aluminum electrolytic capacitors are given in Table 1. Table 1 gives a list of property measurement results of the respective working examples, comparative examples and conventional examples.

[Table 1]

| | Type | Raw material | Thickness μm | Basis weight g/m2 | Density g/cm3 | Melting point °C | Cl ppm | SO4 ppm | Tensile strength N/15mm | Impregnating ability | W/V V | Percent defective % | Capacity μF | Impedance Ω/1kHz |
|---|---|---|---|---|---|---|---|---|---|---|---|---|---|---|
| Working Example 1 | NMMO | TCF-DP | 3.1 | 4.2 | 1.35 | - | 1.1 | 5.1 | 8.8 | - | 160 | 2.3 | 47.7 | 2.55 |
| Working Example 2 | NMMO | TCF-linter | 7.8 | 10.8 | 1.38 | - | 1.5 | 9.3 | 21.6 | ○ | 160 | 0.8 | 45.0 | 2.91 |
| Working Example 3 | NMMO | TCF-DP | 13.8 | 19.0 | 1.38 | - | 0.6 | 9.5 | 37.2 | ○ | 160 | 0.0 | 42.3 | 3.89 |
| Working Example 4 | NMMO | TCF-DP | 17.3 | 23.4 | 1.35 | - | 1.8 | 6.9 | 46.1 | ○ | 160 | 0.0 | 40.7 | 4.82 |
| Working Example 5 | NMMO | TCF-linter | 18.7 | 27.4 | 1.38 | - | 1.2 | 6.7 | 51.8 | ○ | 160 | 0.0 | 38.5 | 5.84 |
| Comparative Example 1 | NMMO | TCF-DP | 2.3 | 3.2 | 1.37 | - | 0.5 | 4.8 | 3.7 | - | 160 | - | - | - |
| Comparative Example 2 | NMMO | TCF-DP | 22.0 | 29.3 | 1.33 | - | 0.8 | 5.5 | 57.8 | ○ | 160 | 0.0 | 38.8 | 9.83 |
| Comparative Example 3 | NMMO | TCF-DP | 14.8 | 20.5 | 1.39 | - | 1.1 | 12.3 | 23.5 | ○ | 160 | 45.1 | 41.7 | 4.67 |
| Comparative Example 4 | NMMO | ECF-DP | 15.1 | 20.0 | 1.32 | - | 2.3 | 5.8 | 22.5 | ○ | 160 | 84.8 | 41.6 | 4.99 |
| Comparative Example 5 | Cellulose film | ECF-DP | 15.5 | 20.4 | 1.32 | - | 12.2 | 51.2 | 32.3 | ○ | 160 | 100.0 | - | - |
| Comparative Example 6 | PP film | PP | 14.3 | 12.3 | 0.86 | 170 | 0.2 | 0.1 | 20.4 | × | 160 | - | - | - |
| Conventional Example 1 | Electrolytic paper | Unbleached kraft | 10.1 | 8.4 | 0.83 | - | 0.3 | 3.6 | 16.7 | ○ | 160 | 54.8 | 44.0 | 2.77 |
| Conventional Example 2 | Electrolytic paper | Unbleached kraft | 15.0 | 12.8 | 0.85 | - | 0.2 | 4.2 | 26.5 | ○ | 160 | 19.2 | 41.7 | 9.41 |
| Conventional Example 3 | Electrolytic paper | Unbleached kraft | 40.2 | 30.2 | 0.75 | - | 0.5 | 5.4 | 66.6 | ○ | 160 | 0.0 | 33.0 | 6.15 |

In the case of using the 2.3 μm-thick cellulose film obtained in Comparative Example 1, the cellulose film often broke during the process of constructing the aluminum electrolytic capacitor element, and thus an aluminum electrolytic capacitor could not be constructed. Since the tensile strength is 3.7 N/ 15 mm, which is low, it is considered that the film could not tolerate a winding tension in the process of capacitor element construction.

In the case of using the PP film of Comparative Example 6, the PP film could not retain the electrolyte and therefore the capacitor did not function as an aluminum electrolytic capacitor.

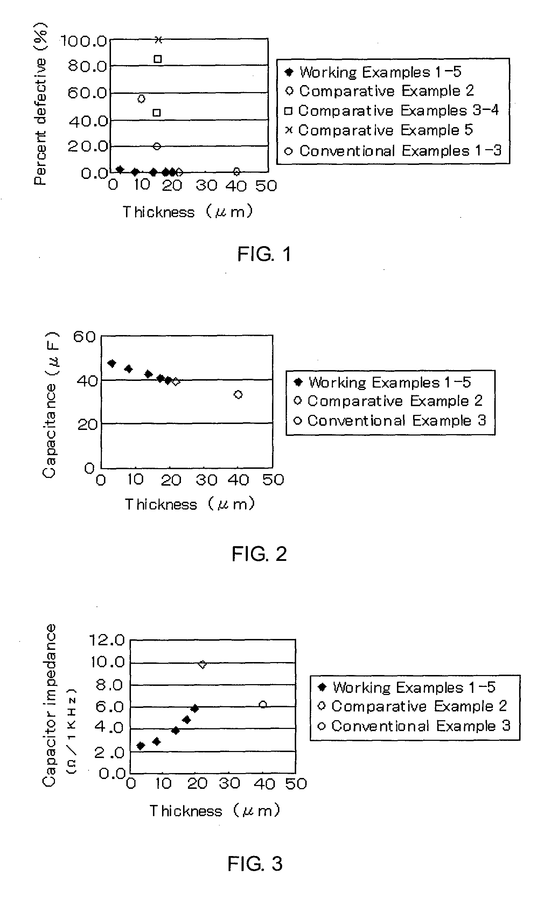

Percent defective measurement results of the 160 WV aluminum electrolytic capacitors using the cellulose films obtained in Working Examples 1 to 5, the cellulose films obtained in Comparative Examples 2 to 5 and the electrolytic papers obtained in Conventional Examples 1 to 3 are given in FIG. 1. FIG. 1 is a plotted graph showing extracted relationships between thickness of separators and percent defective after aging for the 160 WV aluminum electrolytic capacitors.

As shown in FIG. 1, the percent defectives of the 160 WV aluminum electrolytic capacitors, which use the 13.8 μm-thick cellulose film obtained in Working Example 3, the 17.3 μm-thick cellulose film obtained in Working Example 4 and the 19.7 μm-thick cellulose film obtained in Working Example 5, are all 0%. The percent defective of the aluminum electrolytic capacitor using the 7.9 μm-thick cellulose film obtained in Working Example 2 is 0.8%, and percent defective of the aluminum electrolytic capacitor using the 3.1 μm-thick cellulose film obtained in Working Example 1 is 2.3%. The percent defective of the aluminum electrolytic capacitor using the 22.0 μm-thick cellulose film obtained in Comparative Example 2 is 0%.

The percent defective of the aluminum electrolytic capacitor using the 40.2 μm-thick Fourdrinier/cylinder duplex obtained in Conventional Example 3 that is generally used as a separator for the 160 WV aluminum electrolytic capacitor is 0%. The percent defectives of the aluminum electrolytic capacitor using the 10.1 μm-thick Fourdrinier simplex obtained in Conventional Example 1 and the aluminum electrolytic capacitor using the 15.0 μm-thick Fourdrinier simplex obtained in Conventional Example 2 are 54.8% and 19.2%, respectively, where the percent defectives are significantly higher than that of a cellulose film of approximately the same thickness. Since the cellulose film is uniform and dense, it has greater short-circuit resistance characteristics than electrolytic paper of the same thickness. Therefore, a cellulose film having a thickness with which the electrolytic paper cannot be used can be used as a separator.

The percent defective of the aluminum electrolytic capacitor using the cellulose film having a hydrosulfate content of 12.3 ppm obtained in Comparative Example 3 is 45.1%. The percent defective of the aluminum electrolytic capacitor using the cellulose film having a chlorine content of 2.3 ppm obtained in Comparative Example 4 is 84.6%. The chlorine content and hydrosulfate content of the cellulose film available as a separator for an aluminum electrolytic capacitor are 2 ppm or less and 10 ppm or less, respectively.

Note that the cellulose film made through the viscose process of Comparative Example 5 has high contents of chlorine and hydrosulfate, and the percent defective of the aluminum electrolytic capacitor using this cellulose film as a separator is 100%. This aluminum electrolytic capacitor is unsuitable for use.

Capacitance measurement results of the 160 WV aluminum electrolytic capacitors which have percent defectives of 3.0% or less after aging the aluminum electrolytic capacitors, using the cellulose films obtained in Working Examples 1 to 5, the cellulose film obtained in Comparative Example 2 and the electrolytic paper obtained in Conventional Example 3 are given in FIG. 2. FIG. 2 is a plotted graph showing extracted relationships between thickness of separators for the 160 WV aluminum electrolytic capacitors and capacitance of the aluminum electrolytic capacitors.

If the separator is made thinner, area of the anode aluminum foil in the element of the same size can increase, and thus the capacitance of the aluminum electrolytic capacitor increases. While the capacitance of the aluminum electrolytic capacitor using the 40.2 μm-thick Fourdrinier/cylinder duplex obtained in Conventional Example 3 is 33.0 μF, as shown in FIG. 2, capacitance of the aluminum electrolytic capacitor using the 3.1 μm-thick cellulose film obtained in Working Example 1 is 47.7 μF, where improvement in capacitance is 44.4%.

The capacitance of the aluminum electrolytic capacitor using the 13.8 μm-thick cellulose film obtained in Working Example 3 is 42.3 μF, where the capacitance has improved 28.2% more than that of the aluminum electrolytic capacitor using the 40.2μ m-thick Fourdrinier/cylinder duplex obtained in Conventional Example 3. The percent defectives of the aluminum electrolytic capacitor using the Fourdrinier/cylinder duplex obtained in Conventional Example 3 and aluminum electrolytic capacitor using the cellulose film obtained in Working Example 3 are both 0%. Use of the cellulose film of the present invention allows improvement in capacitance of the aluminum electrolytic capacitor without increasing the percent defective thereof.

Impedance characteristic (1 kHz) measurement results of the 160 WV aluminum electrolytic capacitors which have percent defectives of 3.0% or less after aging the aluminum electrolytic capacitors, using the cellulose films obtained in Working Examples 1 to 5, the cellulose film obtained in Comparative Example 2 and the electrolytic paper obtained in Conventional Example 3 are given in FIG. 3. FIG. 3 is a plotted graph showing extracted relationships between thickness of separators for the 160 WV aluminum electrolytic capacitors and impedance characteristics (1 kHz) of the aluminum electrolytic capacitors.

While the impedances of the aluminum electrolytic capacitors using the cellulose films obtained in Working Examples 1 to 5 are 2.55Ω, 2.91Ω, 3.89Ω, 4.82Ω and 5.84Ω, respectively, as shown in FIG. 3, the impedance at 1 kHz of the aluminum electrolytic capacitor using the 22.0 μm-thick cellulose film obtained in Comparative Example 2 is 9.83Ω. Since the impedance characteristics of the aluminum electrolytic capacitors deteriorate quadratically when the cellulose film becomes thicker, a practicable thickness for the cellulose film as the separator is 20 μm or less.

A thickness of 20 μm or less, with which there is a low impedance deterioration rate, allows a shorter anode-cathode distance since a cellulose film thinner than electrolytic paper can be used, and therefore impedance characteristics at 1 kHz are improved and deteriorated portions due to increase in density can be compensated. Furthermore, in the case of constructing capacitor elements of the same size, an effect of decreasing impedance occurs due to capacity enlargement. There are also cases where use of a thin cellulose film rather than thick electrolytic paper decreases the impedance of an aluminum electrolytic capacitor.

Using the cellulose films obtained in Working Examples 3 to 5, the cellulose film obtained in Comparative Example 7 and the electrolytic papers obtained in Conventional Examples 4 and 5, one thousand 450 WV aluminum electrolytic capacitors are constructed, and percent defective, capacitance and impedance are measured.

The physical properties of the cellulose films obtained in Working Examples 3 to 5, the cellulose film obtained in Comparative Example 7 and the electrolytic papers obtained in Conventional Examples 4 and 5, and evaluation results of the aluminum electrolytic capacitors are given in Table 2. Table 2 gives a list of property measurement results of the respective working examples, comparative examples and conventional examples.

[Table 2]

| | Type | Raw material | Thickness μm | Basic weight g/m2 | Density g/cm3 | Melting point °C | Cl ppm | SO4 ppm | Tensile strength N/15mm | Impregnating ability | WV V | Percent defective % | Capacity μF | Impedance Ω/1 kHz |
|---|---|---|---|---|---|---|---|---|---|---|---|---|---|---|
| Working Example 3 | NMMO | TCF-DP | 13.8 | 19.0 | 1.38 | — | 0.8 | 9.5 | 37.2 | ○ | 450 | 1.9 | 7.0 | 24.09 |
| Working Example 4 | NMMO | TCF-DP | 17.3 | 23.4 | 1.35 | — | 1.8 | 5.8 | 46.1 | ○ | 450 | 0.7 | 6.8 | 30.37 |
| Working Example 5 | NMMO | TCF-linter | 18.7 | 27.4 | 1.38 | — | 1.2 | 0.7 | 51.9 | ○ | 450 | 0.0 | 6.6 | 33.43 |
| Comparative Example 7 | Cellulose film | ECF-linter | 18.8 | 25.0 | 1.33 | — | 126 | 485 | 30.4 | — | 160 | 100.0 | — | — |
| Conventional Example 4 | Electrolytic paper | Unbleached kraft | 20.1 | 18.4 | 0.86 | — | 0.8 | 4.7 | 34.3 | ○ | 450 | 35.7 | 6.6 | 20.57 |
| Conventional Example 5 | Electrolytic paper | Unbleached kraft | 60.0 | 45.2 | 0.75 | — | 0.5 | 6.1 | 110.7 | ○ | 450 | 0.0 | 4.7 | 39.57 |

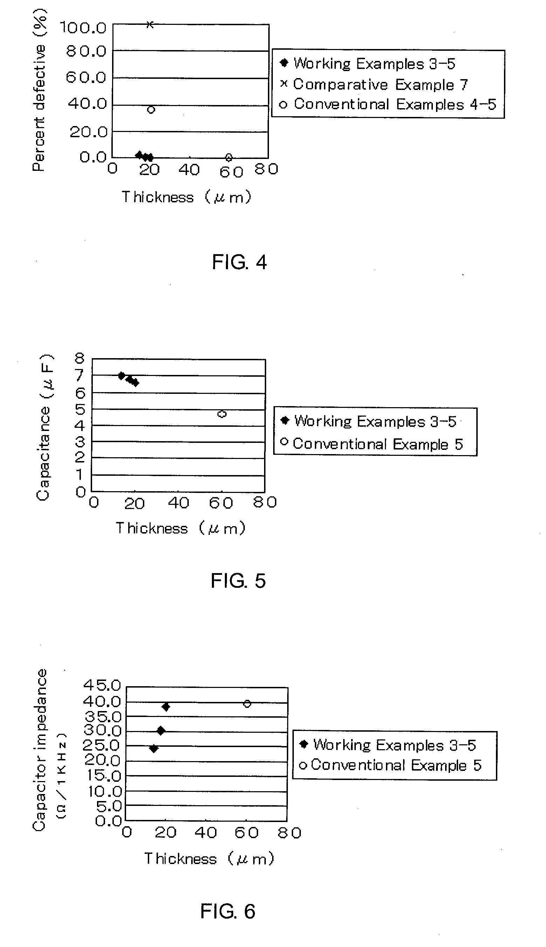

Percent defective measurement results of the 450 WV aluminum electrolytic capacitors using the cellulose films obtained in Working Examples 3 to 5, the cellulose film obtained in Comparative Example 7 and the electrolytic papers obtained in Conventional Examples 4 to 5 are given in FIG. 4. FIG. 4 is a plotted graph showing extracted relationships between thickness of separators for the 450 WV aluminum electrolytic capacitors and impedance characteristics of the aluminum electrolytic capacitors.

As shown in FIG. 4, the percent defective of the aluminum electrolytic capacitor using the 60.0 $\mu$m-thick Fourdrinier/cylinder duplex obtained in Conventional Example 5 that is generally used as a separator for the 450 WV aluminum electrolytic capacitor is 0%. While the percent defective of the aluminum electrolytic capacitor using the 19.7 $\mu$m-thick cellulose film obtained in Working Example 5 is 0%, the percent defective of the aluminum electrolytic capacitor using the 20.1 $\mu$m-thick Fourdrinier simplex obtained in Conventional Example 4 is 35.7%.

Excellent short-circuit resistance characteristics are required by the separator for a 450 WV aluminum electrolytic capacitor. In the case of using electrolytic paper, it is necessary to secure anode-cathode distance using a thick electrolytic paper as in Conventional Example 5 so that the anode aluminum foil and the cathode aluminum foil are completely isolated; however, the cellulose film is dense and uniform and is thereby usable as a separator having a thickness of 20 $\mu$m or less.

Note that the cellulose film of Comparative Example 7 has high contents of chlorine and hydrosulfate, and the percent defective of the aluminum electrolytic capacitor using this cellulose film as a separator is 100%.

Capacitance measurement results of the 450 WV aluminum electrolytic capacitors which have percent defectives of 3.0% or less after aging the aluminum electrolytic capacitors, using the cellulose films obtained in Working Examples 3 to 5, and the electrolytic paper obtained in Conventional Example 5 are given in FIG. 5. FIG. 5 is a plotted graph showing extracted relationships between thickness of separators for the 450 WV aluminum electrolytic capacitors and capacitance of the aluminum electrolytic capacitors.

As shown in FIG. 5, the capacitance of the aluminum electrolytic capacitors using the cellulose films obtained in Working Examples 3 to 5 increased 48.9%, 44.7% and 40.4%, respectively, more than the capacitance of the aluminum electrolytic capacitor using the Fourdrinier/cylinder duplex obtained in Conventional Example 5.

Impedance characteristic (1 kHz) measurement results of the 450 WV aluminum electrolytic capacitors which have percent defectives of 3.0% or less after aging the aluminum electrolytic capacitors, using the cellulose films obtained in Working Examples 3 to 5, and the electrolytic paper obtained in Conventional Example 5 are given in FIG. 6. FIG. 6 is a plotted graph showing extracted relationships between thickness of separators for the 450 WV aluminum electrolytic capacitors and impedance characteristics (1 kHz) of the aluminum electrolytic capacitors.

As shown in FIG. 6, relationships between thickness of separators for the 450 WV aluminum electrolytic capacitors and impedance at 1 kHz of the aluminum electrolytic capacitors are plotted. The impedance of the aluminum electrolytic capacitor using the cellulose film of Working Example 3 is 24.09$\Omega$, impedance of the aluminum electrolytic capacitor using the cellulose film of Working Example 4 is 30.37$\Omega$, and impedance of the aluminum electrolytic capacitor using the cellulose film of Working Example 5 is 38.43$\Omega$. The impedance of the aluminum electrolytic capacitor using the Fourdrinier/cylinder duplex of Conventional Example 5 is 39.57$\Omega$. When thickness of a cellulose film of a 450 WV aluminum electrolytic capacitor becomes thicker than 20 $\mu$m, it can be presumed that impedance characteristics tend to deteriorate significantly.

As is apparent from the embodiments, working examples, etc., a film may be provided by dissolving a cellulose base material, separating the cellulose to a molecular chain level, making it into a sheet form and regenerating the cellulose, and a very dense and uniform film may be made. Moreover, since this film does not have any void parts unlike a high density electrolytic paper, it may have a higher density than the electrolytic paper. As a result, in comparison to electrolytic paper of the same thickness, short-circuit resistance characteristics are significantly improved due to improvement in minuteness and uniformity, and to increase in density.

Moreover, a cellulose film made using an amine oxide cellulose solvent does not contain an impurity that corrodes an anodic oxide film of an aluminum electrolytic capacitor. Furthermore, using cellulose that has a hydrosulfate content of 200 ppm or less and is either TCF bleached or unbleached as cellulose to be dissolved may obtain a cellulose film which is usable as a separator for an aluminum electrolytic capacitor, having a chlorine content of 2 ppm or less and a hydrosulfate content of 10 ppm or less.

When making a cellulose film from an amine oxide cellulose solvent, gas does not generate as with the viscose process since a chemical reaction does not occur and there are no air bubbles within the film. Therefore, pinholes do not exist even with a thin cellulose film, thereby securing short-circuit resistance characteristics.

Since the cellulose films according to the embodiments of the present invention are uniform and dense, they have further excellent short-circuit resistance characteristics than electrolytic paper of the same thickness, short-circuit resistance characteristics can be secured even if they are made to be thinner. As a result, capacitors constructed using the cellulose films according to the embodiments of the present invention that are thinner than the conventional electrolytic paper have the same or better short-circuit resistance characteristics and lower impedance than a capacitor using the conventional electrolytic paper. In other words, use of a cellulose film having a thickness of 20 $\mu$m or less as a separator for an aluminum electrolytic capacitor allows down sizing and/or capacity enlargement of the aluminum electrolytic capacitor without deteriorating the impedance characteristic.

Furthermore, since even a cellulose film having a thickness of 10 $\mu$m or less, which is marginal thickness for the electrolytic paper, has sufficient short-circuit resistance characteristics, use of this cellulose film as a separator for an aluminum electrolytic capacitor allows further down sizing and/or capacity enlargement of the aluminum electrolytic capacitor that could not be implemented when using the conventional electrolytic paper as the separator.

**Claims**

1. A separator for an electrolytic capacitor, wherein the separator is a film using cellulose as a raw material.

2. The separator for the electrolytic capacitor according to claim 1, wherein the film using cellulose as a raw material is a cellulose film obtained by forming in a film form a cellulose solution obtained by dissolving cellulose in an amine oxide solvent, immersing the resulting cellulose solution in water or a poor solvent of the amine oxide solvent so as to coagulate and regenerate the cellulose, washing the regenerated cellulose with water to remove the amine oxide solvent, and drying the resulting cellulose.

3. The separator for the electrolytic capacitor according to claim 2, wherein the amine oxide solvent is N-methylmorpholine-N-oxide.

4. The separator for the electrolytic capacitor according to any one of claim 1 to claim 3, wherein film thickness is 3 to 20 $\mu$m.

5. The separator for the electrolytic capacitor according to any one of claim 1 to claim 4, wherein chlorine content of the film is 2 ppm or less.

6. The separator for the electrolytic capacitor according to any one of claim 1 to claim 5, wherein hydrosulfate content of the film is 10 ppm or less.

7. An electrolytic capacitor having the separator as defined in any one of claim 1 to claim 6 interleaving between an anode foil and a cathode foil.

FIG. 1

FIG. 2

FIG. 3

FIG. 4

FIG. 5

FIG. 6

**INTERNATIONAL SEARCH REPORT**

| | International application No. |
|---|---|
| | PCT/JP2011/076038 |

**A. CLASSIFICATION OF SUBJECT MATTER**
*H01G9/02*(2006.01)i

According to International Patent Classification (IPC) or to both national classification and IPC

**B. FIELDS SEARCHED**

Minimum documentation searched (classification system followed by classification symbols)
H01G9/02

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2008-124064 A  (Asahi Kasei Fibers Corp.),<br>29 May 2008 (29.05.2008),<br>paragraphs [0007] to [0010], [0034]<br>(Family: none) | 1,4-7<br>2,3 |
| A | JP 10-25642 A  (Asahi Chemical Industry Co.,<br>Ltd.),<br>27 January 1998 (27.01.1998),<br>paragraphs [0011], [0012]<br>(Family: none) | 1-7 |
| A | JP 2005-537407 A  (Lenzing AG.),<br>08 December 2005 (08.12.2005),<br>paragraph [0016]<br>& US 2005/0225002 A1    & EP 1534882 A<br>& WO 2004/022822 A1 | 1-7 |

☐ Further documents are listed in the continuation of Box C.      ☐ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 01 February, 2012 (01.02.12) | 14 February, 2012 (14.02.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

**Patent documents cited in the description**

- JP 3693299 B
- JP 2008542560 A

- JP 2009508015 A

**Non-patent literature cited in the description**

- Experimental and analytical methods of cellulose. *Dissolution of cellulose in alkaline-urea solvent and regenerative gelatinization thereof, KUGA, Shigenori, CAI Jie Cellulose Communications,* 2008, vol. 15 (2